# EUROPÄISCHE PATENTSCHRIFT

(11) **EP 0 927 344 B1**
(45) Veröffentlichungstag und Bekanntmachung des Hinweises auf die Patenterteilung: **16.08.2001**
(21) Anmeldenummer: 97931655.1
(22) Anmeldetag: 25.06.1997
(51) Int. Cl.: G01L 9/00

(54) **DRUCKSENSOREINHEIT, INSBESONDERE FÜR DIE KRAFTFAHRZEUGTECHNIK**
PRESSURE SENSOR UNIT, ESPECIALLY FOR AUTOMOTIVE ENGINEERING
UNITE CAPTEUR DE PRESSION, DESTINEE NOTAMMENT AU GENIE AUTOMOBILE

(30) Priorität: 16.09.1996 DE 19637763
(43) Veröffentlichungstag der Anmeldung: 07.07.1999
(73) Patentinhaber: TRW Automotive Electronics & Components GmbH & Co. KG, 78315 Radolfzell (DE)
(72) Erfinder: PROBST, Uwe, D-78256 Stei lingen (DE); SKOFLJANEC, Robert, D-78132 Hornberg (DE)
(74) Vertreter: Eder, Thomas, Dr.-Ing.
(86) Internationale Anmeldenummer: DE9701323
(87) Internationale Veröffentlichungsnummer: WO9812526

(56) Entgegenhaltungen:
- EP-A- 0 570 624
- EP-A- 0 677 727
- EP-A- 0 724 277
- DE-A- 19 507 143

## Beschreibung

Die Erfindung betrifft eine Drucksensoreinheit, insbesondere für die Kraftfahrzeugtechnik, mit den Merkmalen des Oberbegriffs des Patentanspruchs 1.

Drucksensoreinheiten sind in vielfältigen Ausführungen bekannt und finden in der Kraftfahrzeugtechnik beispielsweise als Sensorelemente zur Überwachung des Öldrucks von Motoren oder des Bremsdrucks Verwendung.

Derartige Drucksensoreinheiten umfassen in der Regel ein Gehäuse mit einer Zuführöffnung für das Druckmedium, dessen Druck zu überwachen ist, wobei das Druckmedium über die Zuführöffnung einer im Gehäuse aufgenommenen Druckmeßzelle zugeführt wird. Das Gehäuse der Drucksensoreinheit kann beispielsweise in einem vorderen Bereich ein Außengewinde aufweisen, welches für das Einschrauben der Drucksensoreinheit in eine entsprechende Ausnehmung mit einem Innengewinde in dem zu überwachenden System dient.

Da insbesondere in der Kraftfahrzeugtechnik eine hohe Langzeitstabilität bei gleichzeitiger Resistenz gegen aggressive Medien und rauhe Umgebungsbedingungen gefordert wird, finden hier insbesondere sog. mediengetrennte Drucksensoreinheiten Verwendung, bei denen das Druckmedium, dessen Druck zu überwachen ist, nicht mit dem eigentlichen Sensorelement in Berührung kommt, welches im Gehäuse der Drucksensoreinheit aufgenommenen Druckmeßzelle angeordnet ist.

Zur Medientrennung findet eine Trennmembran Anwendung, die eine Beaufschlagungsöffnung der Druckmeßzelle abdichtend abschließt und welche vom zu überwachenden Druckmedium beaufschlagt wird. Der die Trennmembran beaufschlagende Druck wird mittels eines Druckübertragungsmediums auf den eigentlichen, in der Druckmeßzelle enthaltenen Drucksensor übertragen. Als Druckübertragungsmedium findet bei den bekannten Druckmeßzellen bzw. Drucksensoreinheiten ein Silikonöl Verwendung. Die Trennmembran ist meist als Edelstahlfolie geringer Dicke ausgebildet, die mit dem Gehäuse der Druckmeßzelle verschweißt, beispielsweise laserverschweißt, wird. Nach dem Verschweißen wird der Innenraum der Druckmeßzelle, in welcher der eigentliche Drucksensor angeordnet ist, über ein Füllröhrchen mit dem Silikonöl gefüllt.

Eine derartige, beispielsweise aus "SENSORMAGAZIN 4/89, Seiten 16 bis 19" bekannte Druckmeßzelle weist jedoch infolge des Schweißvorgangs für die Trennmembran und infolge des Füllvorgangs über das Füllröhrchen einen komplizierten Aufbau auf, was in entsprechend hohen Herstellkosten resultiert. Der komplizierte Aufbau macht es in der Regel erforderlich, daß derartige Druckmeßzellen von einem OEM-Hersteller als fertig funktionsfähige Elemente montiert werden müssen und der Endanwender, beispielsweise ein Kraftfahrzeughersteller, keinen Einfluß auf den konstruktiven Aufbau derartiger Meßzellen nehmen kann.

Des weiteren ist aus "SENSORREPORT 5/1994, Seiten 22 bis 24" eine mediengetrennte Druckmeßzelle bekannt, bei der die Membran aus den Elastomeren, wie EPDM, Viton oder FVMO bestehen kann. Bei dieser Druckmeßzelle ist die Membran topfförmig ausgebildet, wobei der Topfboden als eigentliche Trennmembran dient und die Membran am oberen, nach außen gebogenen Rand der Topfwandung zwischen zwei Gehäuseteilen der Druckmeßzelle eingeklemmt ist. Der Innenraum der Druckmeßzelle ist wiederum mit Silikonöl als Druckübertragungsmedium gefüllt.

Nachteilig bei einer derartigen Ausbildung der Druckmeßzelle ist jedoch der relativ komplizierte Aufbau des Gehäuses der Meßzelle zur Montage und Halterung der Trennmembran, welche ebenfalls einen relativ komplizierten Aufbau aufweist. Auch diese Bauweise erfordert, daß eine derartige Druckmeßzelle vom Hersteller funktionsfertig geliefert wird.

Weitere Drucksensoren, in welchen eine Membran Verwendung findet, since aus EP-A-0 677 727 und DE-A-19 507 143 bekannt. In diesen Vorrichtungen ist die Membran zwischen Gehäuseteile der Drucksensor einheit festgeklemmt.

Ausgehend von diesem Stand der Technik liegt der vorliegenden Erfindung die Aufgabe zugrunde, eine Drucksensoreinheit, insbesondere für die Kraftfahrzeugtechnik, zu schaffen, welche einen einfachen konstruktiven Aufbau aufweist und demzufolge mit geringen Herstellungskosten realisierbar ist.

Die Erfindung löst diese Aufgabe mit den Merkmalen des Patentanspruchs 1.

Die Erfindung geht von der Erkenntnis aus, daß sich durch eine einfache Klemmung der Trennmembran zwischen Außenflächen des Druckmeßzellengehäuses und damit zusammenwirkenden Innenflächen des eigentlichen Gehäuses der Drucksensoreinheit ein sehr einfacher und kostengünstiger Aufbau der Drucksensoreinheit realisierbar ist. Hierbei wird der bisher beschrittene Weg verlassen, nach dem die eigentliche Druckmeßzelle zunächst komplett funktionsfähig hergestellt und erst anschließend in das Gehäuse einer geeignet ausgebildeten Drucksensoreinheit mit einer Zuführöffnung für das Druckmedium und Anschlußkontakten für den eigentlichen Sensor montiert wird.

Bei der bevorzugten Ausführungsform der Erfindung ist das Meßzellengehäuse mit einem Durchbruch versehen, dessen eine Öffnung die mit der Trennmembran zu verschließende Beaufschlagungsöffnung darstellt und dessen andere Öffnung zur Montage eines Trägers mit einem darauf angeordneten Drucksensor dient. Der Träger kann hierzu beispielsweise als TO-Gehäuse mit Anschlußpins ausgebildet sein, auf dem der eigentliche Sensor montiert ist. Der Sensor kann in herkömmlicher Weise, beispielsweise als Siliziummembran mit integrierten piezoresistiven Halbleiterwiderständen, ausgebildet sein.

Bei der bevorzugten Ausführungsform der Erfindung besteht die Trennmembran aus Kunststoff, vorzugsweise aus einem Polyimid.

Die Trennmembran liegt im nicht-montiertem Zustand der Sensoreinheit vorzugsweise als ebene Folie vor. Hierdurch ergibt sich der Vorteil eines äußerst geringen Aufwands für die Herstellung der Trennmembran.

Bei der bevorzugten Ausführungsform der Erfindung sind die zur Klemmung der Trennmembran zusammenwirkenden Außenflächen des Meßzellengehäuses und Innenflächen des Gehäuses der Drucksensoreinheit im wesentlichen eben ausgebildet. Hierdurch ergibt sich der Vorteil, daß in die entsprechende Ausnehmung des Gehäuses der Drucksensoreinheit, welche auch mit der Zuführöffnung für das Druckmedium verbunden ist, lediglich die, vorzugsweise in Form einer ebenen Folie ausgebildete Trennmembran, eingelegt und anschließend die Druckmeßzelle eingeführt werden muß. Zur Klemmung der Membran zwischen den ebenen Flächen wird das Gehäuse der Druckmeßzelle mit einer entsprechenden Andruckkraft beaufschlagt.

Zur Abdichtung sowohl der Beaufschlagungsöffnung der Druckmeßzelle als auch des Innenraums des Gehäuses der Drucksensoreinheit gegenüber der Zuführöffnung können in den jeweils zusammenwirkenden Flächen des Meßzellengehäuses bzw. des Gehäuses der Drucksensoreinheit eine oder mehrere Nuten zur Aufnahme von Dichtelementen, vorzugsweise O-Ringen, vorgesehen sein. Diese Dichtelemente ragen im nicht-montierten Zustand geringfügig über die jeweilige Oberfläche hinaus und bewirken durch eine entsprechende Kompression bei der Montage auf einfache Weise eine sichere Abdichtung.

Bei der bevorzugten Ausführungsform der Erfindung wird anstelle des bisher üblichen Silikonöls als Druckübertragungsmedium ein gelartiges oder geleeartiges Druckübertragungsmedium verwendet. Hierdurch ergibt sich der Vorteil einer einfacheren Abdichtung der Drucksensoreinheit, da ein derartiges Druckmedium keinerlei Kriecheigenschaften besitzt. Die Viskosität eines gelartigen Druckübertragungsmediums wird vorzugsweise so gewählt, daß im wesentlichen kein Abfließen des Gels infolge der Schwerkraft aus der Ausnehmung des Meßzellengehäuses oder allenfalls ein tolerierbar langsames Abfließen erfolgen würde.

Wird die Viskosität des Druckübertragungsmediums so weit reduziert, daß sich eine geleeartige Beschaffenheit ergibt, so wird ein Abfließen gänzlich vermieden. Diesbezüglich ist jedoch zu beachten, daß die Härte/Elastizität des Gelees so gewählt wird, daß die Funktion als Druckübertragungsmedium aufrechterhalten bleibt.

Durch die Verwendung eines geleeartigen oder gelartigen Druckübertragungsmediums ergibt sich der Vorteil einer einfachen Befüllung der Ausnehmung der Druckmeßzelle und einer einfachen Montage der Druckmeßzelle im Gehäuse der Drucksensoreinheit.

Bei der bevorzugten Ausführungsform der Erfindung wird als gel- oder geleeartiges Druckübertragungsmedium ein Zweikomponenten-Silikongel oder -gelee oder ein Zweikomponenten-Silikon-Kautschukgel oder -gelee verwendet. Hierdurch ist ein einfacher Befüllvorgang der Ausnehmung der Druckmeßzelle gewährleistet, da die beiden Komponenten unmittelbar nach dem Mischen noch eine relativ hohe Viskosität aufweisen und demzufolge ein einfaches Befüllen möglich ist. Nach dem "Aushärten", beispielsweise durch Temperatur oder UV-Strahlung, wird die gewünschte Viskosität bzw. Härte/Elastizität des Druckübertragungsmediums erreicht, mit der Folge, daß ein Auslaufen des Druckübertragungsmediums selbst bei geringen Undichtigkeiten vermieden wird.

Bei der bevorzugten Ausführungsform der Erfindung ist das Gehäuse der Drucksensoreinheit zweiteilig ausgebildet, wobei die Druckmeßzelle in dem die Zuführöffnung aufweisenden ersten Teil des Gehäuses montiert ist und in dem zweiten Teil des Gehäuses die Anschlußkontakte zur Kontaktierung des eigentlichen Sensors vorgesehen sind.

In der Regel ist in der Drucksensoreinheit noch eine elektronische Schaltung zur Auswertung und/oder Verarbeitung des Signals des Drucksensors vorgesehen, welche unmittelbar mit den Anschlußkontakten im zweiten Teil des Gehäuses verbunden sein kann. Die Kontaktierung des Drucksensors kann dann in einfacher Weise durch das Vorsehen einer Fassung auf der elektronischen Schaltung erfolgen, in welche die Pins des Drucksensors eingeführt werden können. Das Einführen kann gleichzeitig mit der Montage der beiden Gehäusehälften der Drucksensoreinheit erfolgen.

Die elektronische Schaltung kann beispielsweise zur Temperaturkompensation des Sensorsignals dienen und/oder auch eine Schalterfunktion der Drucksensoreinheit realisieren. Hierzu kann die elektrische Schaltung das Signal der Druckmeßzelle mit wenigstens einem vorbestimmten, vorzugsweise gespeicherten Schwellwert vergleichen und bei Überschreiten und/oder Unterschreiten des Schwellwerts ein oder mehrere Signale an wenigstens einem der Anschlußkontakte erzeugen oder zwei oder mehrere Anschlußkontakte elektrisch verbinden oder trennen.

Weitere Ausführungsformen der Erfindung ergeben sich aus den abhängigen Ansprüchen.

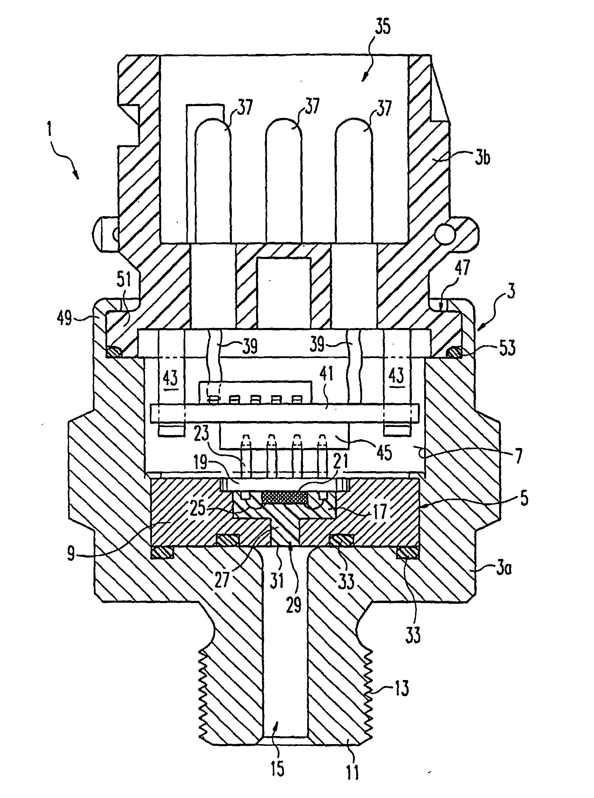

Die Erfindung wird nachfolgend anhand eines in der Zeichnung dargestellten Ausführungsbeispiels näher erläutert.

Die einzige Figur zeigt eine Ausführungsform einer erfindungsgemäßen Drucksensoreinheit 1, die aus einem zweiteiligen Gehäuse 3 besteht, in welchem eine Druckmeßzelle 5 angeordnet ist.

Die Druckmeßzelle 5 ist in einem unteren, ersten Gehäuseteil 3a montiert, welches hierzu eine Ausnehmung 7 aufweist. Die Ausnehmung 7 kann beispielsweise in Form einer Bohrung ausgebildet sein, welche zumindest in ihrem unterem Teil einen Innendurchmesser aufweist, der im wesentlichen dem Außendurchmesser des vorzugsweise scheibenförmig ausgebildeten Meßzellengehäuses 9 entspricht.

Dieses erste Gehäuseteil 3a weist in seinem unteren Bereich einen im wesentlichen kreiszylindrischen Fortsatz 11 auf, welcher mittels eines daran vorgesehenen Außengewindes 13 in eine entsprechende Gewindebohrung am Montageort, beispielsweise an einem Zylinder eines Bremssystems oder im Motorblock, einschraubbar ist.

Für das Zuführen des Druckmediums, dessen Druck zu erfassen ist, ist ausgehend von der Stirnfläche des Fortsatzes 11 des ersten Gehäuseteils 3a eine Zuführöffnung 15 vorgesehen, durch welche das Druckmedium an die Druckmeßzelle herangeführt wird.

Die Druckmeßzelle weist in ihrem Meßzellengehäuse 9 einen Durchbruch 17 auf, der, wie in der Figur dargestellt, im unteren Bereich des Meßzellengehäuses 9 als Bohrung relativ geringen Durchmessers und im oberen Bereich des Meßzellengehäuses 9 als Bohrung größeren Durchmessers ausgebildet sein kann. Im oberen Bereich der Bohrung größeren Durchmessers ist ein bezüglich des Durchmessers nochmals erweiterter Bereich vorgesehen, der zur Aufnahme eines Trägers 19 dient, auf welchem der eigentliche Drucksensor 21 angeordnet ist. Dieser kann beispielsweise als Siliziummembran mit integrierten piezoresistiven Halbleiterwiderständen ausgebildet sein. Der Träger weist Anschlußpins 23 auf, welche mittels Bonddrähten 25 mit dem Drucksensor 21 verbunden sind. In vorteilhafter Weise kann der Träger als TO-Gehäuse ausgebildet sein, die üblicherweise zur Aufnahme von Transistoren oder anderen Halbleiterbauelementen dienen. Hierdurch ergibt sich der Vorteil günstiger Herstellkosten.

Das TO-Gehäuse bzw. dessen Träger 19 kann dann nach dem Einsetzen in den erweiterten oberen Bereich des Durchbruchs des metallischen Meßzellengehäuses 9 mit diesem dicht verschweißt werden. Als Schweißverfahren kann hierbei das Widerstandsschweißverfahren eingesetzt werden, welches ebenfalls den Vorteil günstiger Herstellkosten mit sich bringt.

Nach dem Verschweißen des Trägers 19 mit dem Meßzellengehäuse 9 kann dann der verbleibende Innenraum des Durchbruchs 17 mit einem Druckübertragungsmedium 27 gefüllt werden.

Das nach der Erfindung vorzugsweise zu verwendende Druckübertragungsmedium 27 besitzt gelartige oder geleeartige-Konsistenz. Bei einer gelartigen Konsistenz wird erfindungsgemäß die Viskosität so gewählt, daß ein Auslaufen des Druckübertragungsmediums 27 aus der Beaufschlagungsöffnung 29 des Meßzellengehäuses 9 selbst dann verhindert wird oder zumindest tolerierbar langsam erfolgt, wenn die Achse der Beaufschlagungsöffnung 29 nicht exakt parallel zur Richtung der Schwerkraft verläuft und die Beaufschlagungsöffnung nach oben zeigt.

Bei Verwendung eines Druckübertragungsmediums mit geleeartiger Konsistenz ist ein Auslaufen infolge des sich in Richtung der Austrittsöffnung der Beaufschlagungsöffnung 29 verjüngenden Querschnitts ohnehin unmöglich. Bei geleeartiger Konsistenz des Druckübertragungsmediums 27 ist jedoch darauf zu achten, daß dessen Härte/Elastizität so gewählt wird, daß eine wirksame Druckübertragung von der Austrittsöffnung der Beaufschlagungsöffnung 29 auf den eigentlichen Drucksensor 21 gewährleistet ist.

Erfindungsgemäß finden insbesondere ein Zweikomponenten-Silikongel oder ein Zweikomponenten-Silikon-Kautschukgel mit jeweils geleeartiger oder gelartiger Konsistenz Verwendung. Ein derartiges Druckübertragungsmedium weist den Vorteil auf, daß unmittelbar nach dem Mischen der beiden Komponenten das Druckübertragungsmedium noch eine relativ hohe Viskosität besitzt, so daß ein einfaches Befüllen des Innenraums des Durchbruchs 17 des Meßzellengehäuses 9 gewährleistet, insbesondere das vollständige Ausfüllen des Durchbruchs mit dem Druckübertragungsmedium, sichergestellt ist.

Die beiden Komponenenten "härten" infolge einer chemischen Reaktion, die beispielsweise durch Zuführen von Wärme oder UV-Licht unterstützt werden kann, aus bzw. nehmen dann die gewünschte geleeartige oder gelartige Konsistenz an. Die gewünschte Konsistenz kann durch das Festlegen eines entsprechenden Mischungsverhältnisses der beiden Komponenten eingestellt werden.

Nach dem Füllen des Innenraums des Durchbruchs 17 mit dem Druckübertragungsmedium wird eine Trennmembran 31 bodenseitig in die Ausnehmung 7 des unteren ersten Gehäuseteils 3a der Drucksensoreinheit 1 eingelegt. Die Trennmembran ist zumindest so groß gewählt, daß die bodenseitige Eintrittsöffnung der Zuführöffnung 15 für das Druckmedium abgedeckt ist. Zur Gewährleistung einer möglichst zuverlässigen Abdichtung kann die Trennmembran 31, wie in der Figur dargestellt, kreisförmig ausgebildet sein, wobei der Durchmesser der Trennmembran ebenfalls im wesentlichen dem Innendurchmesser des unteren Bereichs der Ausnehmung 7 entspricht.

Um das Innere des Gehäuses 7 und gleichzeitig den Innenraum des Durchbruchs 17 des Meßzellengehäuses 9 sicher gegen das über die Zuführöffnung 15 zugeführte Druckmedium abzudichten, können sowohl an der unteren Stirnseite des Meßzellengehäuses 9 als auch im Boden der Ausnehmung 7 des unteren Gehäuseteils 3a Nuten zur Aufnahme von Dichtelementen 33 vorgesehen sein, die vorzugsweise als O-Ringe ausgebildet sein können. Die Tiefe der Nuten ist dabei so gewählt, daß die Dichtelemente, die eine ausreichende Elastizität bzw. Kompressibilität aufweisen, im nicht-montierten Zustand des Meßzellengehäuses geringfügig über die jeweilige Oberfläche hinausragen.

Nach dem Einlegen der Trennmembran 31 in die Ausnehmung 7 wird die Meßzelle 5 in die Ausnehmung eingeführt, bis diese ebenfalls mit ihrer Unterseite auf der Trennmembran 31 aufliegt. In dieser Stellung wird die Meßzelle 5 fixiert, wobei sicherzustellen ist, daß ein ausreichender Druck in Richtung auf den Boden der Ausnehmung 7 zur Gewährleistung einer ausreichenden Dichtigkeit ausgeübt wird. Wie in der Figur dargestellt, kann das Fixieren der Meßzelle 5 dadurch erfolgen, daß mittels eines Schälvorgangs ein oder mehrere Bereiche oder ein umlaufender Bereich der seitlichen Innenwandung der Ausnehmung 7 in eine das Meßzellengehäuse hintergreifende Stellung gebracht werden. Auf diese Weise kann während und mittels des Montageprozesses ein entsprechender Druck auf das Meßzellengehäuse 9 erzeugt werden, der auch nach Beendigung des Schälprozesses im wesentlichen erhalten bleibt.

Auf diese Weise können mittels eines einzigen Herstellungsschritts gleichzeitig der Innenraum des Durchbruchs 17 mit dem darin befindlichen Druckübertragungsmedium und der Innenraum der Ausnehmung 7 des unteren Gehäuseteils 3a abgedichtet werden.

Im oberen zweiten Gehäuseteil 3b sind in einem Steckeranschlußbereich Anschlußkontakte 37 vorgesehen, über die die Drucksensoreinheit 1 mittels eines nicht dargestellten Stekkers kontaktiert werden kann. Die Anschlußkontakte 37 können beispielsweise mittels Anschlußleitungen 39 mit einer ebenfalls im oberen zweiten Gehäuseteil 3b gehaltenen elektronischen Schaltung 41 verbunden sein.

Die elektronische Schaltung 41 kann hierzu mittels Halteelementen 43 im Gehäuseteil 3b fixiert sein (vgl. die Figur) oder auch unmittelbar von in das Gehäuseinnere ragenden Enden der beispielsweise in das Gehäuseteil 3b eingespritzten Anschlußkontakte getragen werden.

Die elektronische Schaltung 41 kann im einfachsten Fall lediglich aus einer gedruckten Leiterplatte bestehen, auf der die erforderlichen Bauelemente angeordnet sind. Gleichzeitig kann die Leiterplatte eine Fassung 45 für das Aufnehmen der Anschlußpins 23 des Trägers 19 aufweisen. Das Kontaktieren der elektronischen Schaltung mit dem Drucksensor 21 erfolgt dann in einfacher Weise gleichzeitig mit dem Aufstecken des oberen Gehäuseteils 3b auf das untere Gehäuseteil 3a.

Hierzu kann der untere Gehäuseteil 3a, wie in der Figur dargestellt, einen Aufnahmebereich 47 mit einer Schulter als Anschlag für die Stirnseite des oberen Gehäuseteils 3b aufweisen, sowie eine obere Gehäusewandung 49, die nach dem Aufstecken des oberen Gehäuseteils 3b auf das untere Gehäuseteil 3a über eine Schulter 51 an der Unterseite des oberen Gehäuseteils 3b hinausragt. Diese kann dann nach dem Zusammenfügen der beiden Gehäuseteile 3a, 3b zur festen Verbindung der Gehäuseteile umgebördelt werden.

Um einen dichten Abschluß des Gehäuseinnenraums zu gewährleisten, kann an der Verbindungsstelle der beiden Gehäuseteile 3a, 3b ein weiteres Dichtelement 53, beispielsweise in Form eines O-Rings, vorgesehen sein.

Die elektronische Schaltung kann in an sich bekannter Weise eine Temperaturkompensation des Sensorsignals und/oder eine Verstärkung des Signals bewirken. Sollte dies nicht erforderlich sein, so kann selbstverständlich der Sensor auch direkt mit den Anschlußkontakten 37 verbunden sein.

Des weiteren kann die elektronische Schaltung jedoch auch eine weitere Verarbeitung des Sensorsignals vornehmen: Beispielsweise kann die elektronische Schaltung das Signal der Druckmeßzelle mit einem oder mehreren vorbestimmten, vorzugsweise gespeicherten Schwellwerten vergleichen und bei Überschreiten und/oder Unterschreiten der Schwellwerte entsprechende Aktionen bewirken bzw. Signale auslösen. Hierzu kann eine Digitalisierung des Sensorsignals vorgenommen werden, so daß mittels eines Mikroprozessors oder eines entsprechend ausgebildeten anwenderspezifischen Schaltkreises (ASIC) von dem Sensorsignal praktisch beliebige Aktionen abgeleitet werden können. So kann beispielsweise auch ein Schalter mit mehreren Schaltpunkten realisiert werden. Zur Veränderung der Schaltpunkte müssen dann der elektronischen Schaltung lediglich andere Schwellwerte eingegeben werden. Es lassen sich jedoch selbstverständlich auch weit komplexere Funktionen integrieren.

## Patentansprüche

1. Drucksensoreinheit, insbesondere für die Kraftfahrzeugtechnik,
a) mit einem Gehäuse (3), in welchem eine Druckmeßzelle (5) angeordnet ist, der über eine Zuführöffnung (15) des Gehäuses (3a; 3b) ein Druckmedium zuführbar ist, und welches vom Gehäuseinneren nach außen geführte Anschlußkontakte (37) aufweist,
b) wobei die Druckmeßzelle (5) ein Meßzellengehäuse (9) mit einer Ausnehmung (17) umfaßt, in der ein Drucksensor (21) angeordnet ist und die bis zu einer Beaufschlagungsöffnung (29) mit einem den Drucksensor (21) beaufschlagenden Druckübertragungsmedium (27) gefüllt ist,
c) und wobei eine Trennmembran (31) zur Trennung des Druckmediums vom Druckübertragungsmedium (27) vorgesehen ist, welche die Beaufschlagungsöffnung (29) verschließt,
**dadurch gekennzeichnet,**
d) daß die Trennmembran (31) zur Abdichtung der Beaufschlagungsöffnung (29) zwischen einer oder mehreren Außenflächen des Meßzellengehäuses (9) und damit zusammenwirkenden Innenflächen des Gehäuses (3a, 3b) der Drucksensoreinheit (1) angeordnet ist,
e) wobei ein dichtender Verschluß der Beaufschlagungsöffnung (29) der Druckmeßzelle (5) durch Ausüben einer ausreichenden Anpreßkraft zwischen den jeweils zusammenwirkenden Außenflächen und Innenflächen hergestellt ist, und
f) daß das Druckübertragungsmedium (27) gelartige oder geleeartige Beschaffenheit aufweist.

2. Drucksensoreinheit nach Anspruch 1, **dadurch gekennzeichnet,** daß die Ausnehmung (17) des Meßzellengehäuses (9) als Durchbruch ausgebildet ist, daß der Drucksensor (21) auf einem Träger (19) angeordnet ist und daß der Träger (19) derart mit dem Meßzellengehäuse (9) verbunden ist, daß der Drucksensor (21) in die Ausnehmung (17) ragt, wobei der Träger (19) den Durchbruch einseitig dicht verschließt.

3. Drucksensoreinheit nach Anspruch 1 oder 2, **dadurch gekennzeichnet,** daß die Trennmembran (31) aus Kunststoff, vorzugsweise aus Polyimid, besteht.

4. Drucksensoreinheit nach einem der vorhergehenden Ansprüche, **dadurch gekennzeichnet,** daß die Trennmembran (31) im nicht-montierten Zustand als ebene Folie vorliegt.

5. Drucksensoreinheit nach einem der vorhergehenden Ansprüche, **dadurch gekennzeichnet,** daß die zur Klemmung der Trennmembran (31) zusammenwirkenden Außenflächen des Meßzellengehäuses (9) und Innenflächen des Gehäuses (3, 3a) der Drucksensoreinheit (1) im wesentlichen eben sind.

6. Drucksensoreinheit nach einem der vorhergehenden Ansprüche, **dadurch gekennzeichnet,** daß die die Klemmung der Trennmembran (31) bewirkenden Außenflächen des Meßzellengehäuse (9) und/oder die damit zusammenwirkenden Innenflächen des Gehäuses (3, 3a) der Drucksensoreinheit (1) eine oder mehrere Nuten zur Aufnahme von Dichtelementen (33), vorzugsweise O-Ringen, aufweisen, welche im montierten Zustand die Trennmembran (31) zur Abdichtung beaufschlagen.

7. Drucksensoreinheit nach einem der vorhergehenden Ansprüche, **dadurch gekennzeichnet,** daß die Viskosität des Gels so gewählt ist, daß kein Abfließen des Gels aus der Ausnehmung (17) oder nur ein tolerierbares langsames Abfließen infolge der Schwerkraft erfolgt.

8. Drucksensoreinheit nach einem der vorhergehenden Ansprüche, **dadurch gekennzeichnet,** daß das Gel oder das Gelee ein Zweikomponenten-Silikongel oder -gelee oder ein Zweikomponenten-Silikon-Kautschukgel oder -gelee ist, welches unmittelbar nach dem Mischen der Komponenten eine geringe Viskosität aufweist und nach einer vorbestimmten Zeit nach dem Mischen der Komponenten die gewünschte Viskosität oder Härte/Elastizität erreicht.

9. Drucksensoreinheit nach einem der vorhergehenden Ansprüche, **dadurch gekennzeichnet,** daß das Gehäuse (3; 3a, 3b) zweiteilig ausgebildet ist und daß die Druckmeßzelle (5) in dem die Zuführöffnung (15) aufweisenden ersten Teil (3a) des Gehäuses (3) montiert ist und daß in dem zweiten Teil (3b) des Gehäuses (3) die Anschlußkontakte (37) vorgesehen sind.

10. Drucksensoreinheit nach einem der vorhergehenden Ansprüche, **dadurch gekennzeichnet,** daß die Druckmeßzelle (5) und die Anschlußkontakte (37) mit einer im Gehäuse (3) angeordneten elektronischen Schaltung (41) zur Auswertung und/oder Verarbeitung des Signals des Drucksensors (21) verbunden sind.

11. Drucksensoreinheit nach Anspruch 10, **dadurch gekennzeichnet**, daß die elektronische Schaltung (41) das Signal des Drucksensors (21) mit wenigstens einem vorbestimmten, vorzugsweise gespeicherten Schwellwert vergleicht und bei Überschreiten und/oder Unterschreiten des Schwellwerts ein oder mehrere Signale an wenigstens einem der Anschlußkontakte (37) erzeugt oder zwei oder mehrere Anschlußkontakte (37) elektrisch verbindet oder trennt.

## Revendications

1. Unité capteur de pression, en particulier pour la technologie automobile,
a) comprenant un boîtier (3), dans lequel est agencée une cellule de mesure de pression (5) à laquelle on peut admettre un fluide sous pression via une ouverture d'admission (15) du boîtier (3a ; 3b), et ledit boîtier comportant des contacts de raccordement (37) menés depuis l'intérieur du boîtier jusque vers l'extérieur,
b) dans laquelle la cellule de mesure de pression (5) comporte un boîtier de cellule (9) avec un évidement (17) dans lequel est agencé un capteur de pression (21) et lequel est rempli, jusqu'à une ouverture d'alimentation (29), d'un fluide de transmission de pression (27) qui attaque le capteur de pression (21),
c) et dans laquelle une membrane de séparation (31) est prévue afin de séparer le fluide de pression par rapport au fluide de transmission de pression, celle-ci refermant l'ouverture d'alimentation (29),
caractérisée en ce que
d) la membrane de séparation (31) est agencée entre une ou plusieurs surfaces extérieures du boîtier de cellule (9) et les surfaces intérieures du boîtier (3a, 3b) de l'unité capteur de pression (1), qui coopèrent avec lesdites surfaces extérieures, afin d'étancher l'ouverture d'alimentation (29),
e) une obturation étanche de l'ouverture d'alimentation (29) de la cellule de mesure de pression (5) est établie en exerçant une force de pressage suffisante entre les surfaces extérieures et les surfaces intérieures en coopération respective, et
f) le fluide de transmission de pression (27) présente des propriétés analogues à celles d'un gel ou d'une gelée.

2. Unité capteur de pression selon la revendication 1, caractérisée en ce que l'évidement (17) du boîtier de cellule (9) est réalisé sous forme de traversée, en ce que le capteur de pression (21) est agencé sur un support (19) et le support (19) est relié au boîtier de cellule (9) de telle manière que le capteur de pression (21) pénètre dans l'évidement (17), et en ce que le support (19) referme de manière étanche la traversée sur un côté.

3. Unité capteur de pression selon l'une ou l'autre des revendications 1 et 2, caractérisée en ce que la membrane de séparation (31) est en matière plastique, de préférence en polyimide.

4. Unité capteur de pression selon l'une des revendications précédentes, caractérisée en ce que la membrane de séparation (31) se présente sous forme de film plan dans la situation non montée.

5. Unité capteur de pression selon l'une des revendications précédentes, caractérisée en ce que les surfaces extérieures du boîtier de cellule (9) et les surfaces intérieures du boîtier (3, 3a) de l'unité capteur de pression (1) qui coopèrent pour pincer la membrane de séparation (31) sont sensiblement planes.

6. Unité capteur de pression selon l'une des revendications précédentes, caractérisée en ce que les surfaces extérieures du boîtier de cellule (9) et/ou les surfaces intérieures coopérantes du boîtier (3, 3a) de l'unité capteur de pression (1) qui assurent le pincement de la membrane de séparation (31) présentent une ou plusieurs gorges pour la réception d'éléments d'étanchement (33), de préférence de joints toriques, qui sollicitent la membrane de séparation (31) à l'état monté, pour l'étanchéité.

7. Unité capteur de pression selon l'une des revendications précédentes, caractérisée en ce que la viscosité du gel est ainsi choisie qu'il ne se produit aucun écoulement du gel hors de l'évidement (17), ou bien uniquement un écoulement dû à la gravité lent est tolérable.

8. Unité capteur de pression selon l'une des revendications précédentes, caractérisée en ce que le gel ou la gelée est un gel ou une gelée au silicone à deux composants, ou un gel ou une gelée caoutchouc/silicone à deux composants, qui présente une faible viscosité immédiatement après le mélange des composants, et qui atteint la viscosité souhaitée, ou la dureté/élasticité souhaitée après une durée prédéterminée après le mélange des composants.

9. Unité capteur de pression selon l'une des revendications précédentes, caractérisée en ce que le boîtier (3 ; 3a, 3b) est réalisé en deux parties, en ce que la cellule de mesure de pression (5) est montée dans la première partie (3a) du boîtier (3) qui présente l'ouverture d'admission (15), et en ce que les contacts de raccordement (37) sont prévus dans la deuxième partie (3b) du boîtier (3).

10. Unité capteur de pression selon l'une des revendications précédentes, caractérisée en ce que la cellule de mesure de pression (5) et les contacts de raccordement (37) sont reliés à un circuit électronique (41) agencé dans le boîtier (3) pour l'évaluation et/ou le traitement du signal du capteur de pression (21).

11. Unité capteur de pression selon la revendication 10, caractérisée en ce que le circuit électronique (41) compare le signal du capteur de pression (21) avec au moins une valeur seuil prédéterminée, de préférence mémorisée, et produit, en cas de dépassement et/ou de passage au-dessous de la valeur seuil, un ou plusieurs signaux au niveau de l'un au moins des contacts de raccordement (37), ou assure une liaison ou une séparation électrique de deux ou de plusieurs des contacts de raccordement (37).

## Claims

1. Pressure sensor unit, in particular for automotive engineeing,
a) having a housing (3) in which a pressure-measuring cell (5) to which a pressure medium can be supplied via a feed opening (15) in the housing (3a; 3b) is arranged and which has connection contacts (37) which lead from the housing interior to the outside,
b) the pressure-measuring cell (5) comprising a measuring-cell housing (9) with a recess (17), in which a pressure sensor (21) is arranged and which is filled as far as an action opening (29) with a pressure-transfer medium (27) which acts on the pressure sensor (21),
c) and a separating membrane (31) being provided for the purpose of separating the pressure medium from the pressure-transfer medium (27), which separating membrane closes off the action opening (29),
characterized
d) in that the separating membrane (31), in order to seal off the action opening (29) is arranged between one or more outer surfaces of the measuring-cell housing (9) and inner surfaces, which interact therewith, of the housing (3a, 3b) of the pressure sensor unit (1),
e) a sealing closure of the action opening (29) in the pressure-measuring cell (5) being produced through the exertion of a sufficient compressive ford between the respectively interacting outer surfaces and inner surfaces, and
f) in that the pressure-transfer medium (27) is in a gel-like or jelly-like state.

2. Pressure sensor unit according to Claim 1, characterized in that the recess (17) in the measuring-cell housing (9) is designed as an aperture, in that the pressure sensor (21) is arranged on a support (19), and in that the support (19) is connected to the measuring-cell housing (9) in such a manner that the pressure sensor (21) projects into the recess (17), the support (19) closing the aperture in a sealed manner on one side.

3. Pressure sensor unit according to Claim 1 or 2, characterized in that the separating membrane (31) consists of plastic, preferably of polyimide.

4. Pressure sensor unit according to one of the preceding claims, characterized in that the separating membrane (31), in the uninstalled position, is in the form of a planar film.

5. Pressure sensor unit according to one of the preceding claims, characterized in that the outer surfaces of the measuring-cell housing (9) and inner surfaces of the housing (3, 3a) of the pressure sensor unit (1), which interact to clamp the separating membrane (31) are substantially planar.

6. Pressure sensor unit according to one of the preceding claims, characterized in that the outer surfaces of the measuring-cell housing (9) which clamp the separating membrane (31) and/or the inner surfaces of the housing (3, 3a) of the pressure sensor unit (1) which interact therewith have one or more grooves for holding sealing elements (33), preferably O-rings, which in the installed position act on the separating membrane (31) for sealing purposes.

7. Pressure sensor unit according to one of the preceding claims, characterized in that the viscosity of the gel is selected in such a way that it is impossible for the gel to flow out of the recess (17) or the gel can only flow out in a tolerably slow fashion under the force of gravity.

8. Pressure sensor unit according to one of the preceding claims, characterized in that the gel or the jelly is a two-component silicone gel or jelly or a two-component silicone rubber gel or jelly which, immediately after mixing of the components, has a low viscosity and after a predetermined time after mixing of the components reaches the desired viscosity or hardness/elasticity.

9. Pressure sensor unit according to one of the preceding claims, characterized in that the housing (3; 3a, 3b) is of two-part design, and in that the pressure-measuring cell (5) is installed in the first part (3a) of the housing (3), which has the feed opening (15), and in that the connection contacts (37) are provided in the second part (3b) of the housing (3).

10. Pressure sensor unit according to one of the preceding claims, characterized in that the pressure-measuring cell (5) and the connection contacts (37) are connected to an electronic circuit (41), which is arranged in the housing (3), for evaluating and/or processing the signal from the pressure sensor (21).

11. Pressure sensor unit according to Claim 10, characterized in that the electronic circuit (41) compares the signal from the pressure sensor (21) with at least one predetermined, preferably stored threshold value and, in the event of the signal exceeding and/or falling below the threshold value, generates one or more signals at at least one of the connection contacts (37) or electrically connects or disconnects two or more connection contacts (37).
